# EUROPÄISCHE PATENTSCHRIFT

(11) **EP 2 910 855 B1**
(45) Veröffentlichungstag und Bekanntmachung des Hinweises auf die Patenterteilung: **29.04.2020**
(21) Anmeldenummer: 14156188.6
(22) Anmeldetag: 21.02.2014
(51) Int. Cl.: F23L 15/04, F23C 3/00, F23D 14/12, F23D 14/66

(54) **Rekuperatorbrenner mit Zusatzwärmetauscher**
Recuperative burner with supplementary heat exchanger
Brûleur à récupérateur avec échangeur de chaleur supplémentaire

(43) Veröffentlichungstag der Anmeldung: 26.08.2015
(73) Patentinhaber: WS-Wärmeprozesstechnik GmbH, 71272 Renningen (DE)
(72) Erfinder: Wünning, Dr.-Ing. Joachim G., 71229 Leonberg (DE); Wünning, Dr. Joachim A., 71229 Leonberg (DE)
(74) Vertreter: Rüger Abel Patentanwälte PartGmbB

(56) Entgegenhaltungen:
- EP-A1- 0 109 146
- EP-A1- 1 076 207
- DE-C1- 4 138 434
- US-A1- 2003 075 214

## Beschreibung

Die Erfindung betrifft einen Rekuperatorbrenner, der insbesondere für den Einsatz an Industrieöfen geeignet ist.

An brennstoffbeheizten, insbesondere gasbeheizten, Industrieöfen kann die Abgaswärme durch Luftvorwärmung teilweise zurückgewonnen werden.

Dazu beschreibt DE 195 419 22 A1 einen Brenner mit einem keramischen Rekuperator, der durch ein rohrförmiges Keramikelement gebildet ist. Dieses ist sowohl an der Rohraußenseite als auch an der Rohrinnenseite mit zapfenartigen Vorsprüngen versehen, die der Vergrößerung der Oberfläche des Rekuperatorrohrs dienen. Die Außenseite des Rekuperatorrohrs wird von Abgas umspült. Im Gegenstrom strömt aufzuwärmende Luft an der Innenseite des Rekuperatorrohrs in den Ofenraum. Mit einem solchen als Gegenstromwärmetauscher arbeitenden keramischen Rekuperator lässt sich Abgaswärme aus sehr heißen Abgasen von beispielsweise 1250°C zurückgewinnen. Es wird erfahrungsgemäß ein feuerungstechnischer Wirkungsgrad von 65% bis 70% erreicht.

Aus der DE 1232304 A ist ein Rekuperatorbrenner zur Beheizung eines Strahlrohrs bekannt, wobei dieser Rekuperatorbrenner zur Kühlung des mauerseitigen Flansches und der Mauer einen frischluftdurchströmten Wärmetauscher aufweist, der das Rekuperatorrohr konzentrisch umgibt.

Aus der US 2003/0075214 A1 ist ein thermoelektrischer Generator bekannt, der einen inneren von einer Flamme beheizten Raum und einen äußeren kühlenden Wassermantel aufweist, um ein großes thermisches Gefälle aufzubauen, das von thermoelektrischen Elementen genutzt wird, um elektrische Leistung zu erzeugen. Der Brenner, der die Merkmale des Oberbegriffs des Anspruchs aufweist, ist ein Vorheizbrenner mit einem Rekuperator, der einen äußeren und einen inneren ringförmigen Teil aufweist.

Aus der EP 0109146 A1 ist ein Heizelement mit einem Strahlrohr bekannt, das von innen her mit einem Brenner beheizt ist. Der Brenner weist einen Rekuperator zur Wärmerückgewinnung auf.

Außerdem ist aus der DE 41 38 434 C1 ein Rekuperatorbrenner bekannt, bei dem sich der Rekuperator durch eine Ofenwand hindurch bis in den Ofenraum hinein erstreckt.

Die EP 1076207 A1 offenbart ebenfalls einen Rekuperatorbrenner mit einem sich durch die Ofenwand in den Ofenraum erstreckenden Rekuperator und einem auf der Außenseite der Ofenwand sitzenden zusätzlichen Rekuperator.

Weiter ist aus der EP 1 995 516 B1 ein Rekuperatorbrenner bekannt, der zur Luftvorwärmung ein Bündel abgeflachter, Frischluft führender Rohre aufweist, die in einem dem Ofenraum verlassenden Abgasstrom in einem Ringraum angeordnet sind. Mit diesem Rekuperator lässt sich die Luftvorwärmung verbessern und der Wirkungsgrad auf über 80% steigern. Allerdings ist der Einsatz auf Abgastemperaturen bis etwa 1000°C begrenzt. Damit stellt sich insbesondere bei Industriebrennern geringerer Leistung von unter 200 kW das Problem mit vertretbarem Aufwand und bei hohen Abgastemperaturen einen hohen feuerungstechnischen Wirkungsgrad zu erreichen. Insbesondere werden bei Abgastemperaturen von über 1000°C feuerungstechnische Wirkungsgrade von über 80% angestrebt.

Diese Aufgabe wird mit dem Rekuperatorbrenner nach Anspruch 1 gelöst:

Der Rekuperatorbrenner weist eine Wärmerückgewinnungsanordnung mit einem Rekuperator und einenden Rekuperator ringförmig umschließenden Zusatzwärmetauscher auf, wobei der Rekuperator und der Zusatzwärmetauscher sowohl von den Abgasen als auch von der Frischluft jeweils seriell durchströmt sind. Damit wird zuströmende Frischlauft zunächst von dem Zusatzwärmetauscher und dann von dem Rekuperator erwärmt. Abströmendes Abgas wird zunächst in dem Rekuperator und dann in dem Zusatzwärmetauscher gekühlt.

Durch die Aufsplittung der Wärmerückgewinnungsanordnung in zwei unterschiedlich gestaltete Wärmetauscher, nämlich einen Rekuperator, der für hohe Temperaturen geeignet ist, und einen Zusatzwärmetauscher, der für weniger hohe Temperaturen geeignet - dafür aber auf höchste Effizienz ausgelegt ist, wird eine Wärmerückgewinnungsanordnung erhalten, die sowohl heißgastauglich ist wie auch einen hohen feuerungstechnischen Wirkungsgrad von über 80% ermöglicht. Zur Erreichung dieses Ziels trägt im Weiteren bei, dass der Rekuperator in einem zentralen Durchgang des ringförmigen Zusatzwärmetauschers angeordnet ist. Die aus einem Ende des Rekuperators austretenden noch heißen Abgase durchströmen den Zusatzwärmetauscher dann in einer anderen, vorzugsweise in der entgegengesetzten Richtung. Ungenutzte Wärmeverluste, d.h. Wärmeabstrahlung in die Umgebung, lässt sich somit minimieren. Außerdem trägt diese Maßnahme zur kompakten Bauform des Brenners, insbesondere im Bereich des Brennerkopfs bei. Der Rekuperator ist zu einem erheblichen Teil im Brennerkopf angeordnet. Es sind somit Bauformen möglich, bei denen der Rekuperator die Ofenwand nicht oder nur wenig durchragt.

Die Strömungsrichtungen der den Brenner zugeführten Luft sind in dem Zusatzwärmetauscher und dem Rekuperator ebenfalls unterschiedlich, vorzugsweise einander entgegengesetzt. Dies ermöglicht es, der Wärmerückgewinnungsanordnung Frischluft in der Nähe der Ofenwand zuzuführen, um dort Kühleffekte zu bewirken. Beispielsweise kann der Brennerflansch gekühlt und hier dem System so entzogene Wärme dem System zurückgeführt werden. Dies hat insbesondere bei Strahlrohren den Vorteil, den relativ heißen Flansch des die Ofenwand durchragenden Strahlrohrs auf erträglichen Temperaturen halten zu können.

Es ist möglich für den Flanschkühler einen Bypasskanal vorzusehen, so dass lediglich ein Teil der dem Brenner insgesamt zugeführten Luft durch den Flanschkühler strömt und ein anderer Teil der Wärmetauscheranordnung direkt zugeführt wird.

Bei einer bevorzugten Ausführungsform weist der Zusatzwärmetauscher eine spezifische Wärmeübertragungsfläche von wenigstens 0,04 m²/kW auf. Dies wird vorzugsweise mit einem Gegenstromwärmetauscher aus Metallrohren oder auch Metallblech erreicht. Mit dieser spezifischen Wärmeübertragungsfläche des Zusatzwärmetauschers kann im Zusammenspiel mit einem Rekuperator aus Keramik oder Metall ein Feuerungswirkungsgrad von mehr als 80% erreicht werden.

Der Zusatzwärmetauscher weist vorzugsweise mehrere zueinander parallele Luftkanäle auf. Diese können zum Beispiel durch Rohre gebildet sein, die in einem Abgaskanal angeordnet sind. Als Rohre sind Flachrohre mit unrunden Luftkanälen vorgesehen. Vorzugsweise weisen die Flachrohre spaltartige Kanäle auf, um ein besonders hohes Flächen/Volumen-Verhältnis zu erhalten. Ein so ausgebildeter Zusatzwärmetauscher aus Metall kann bei geringem Bauvolumen einen hohen Übertragungswirkungsgrad erzielen.

Der ringförmige Zusatzwärmetauscher kann eine Baueinheit sein oder aus mehreren segmentartigen Baueinheiten bestehen, die zusammengesetzt den ringförmigen Wärmetauscher ergeben. Anstelle einer geschlossenen Ringanordnung kann der Wärmerauscher auch die Form eines geschlitzten oder teilweisen offenen Rings aufweisen.

Der Rekuperator wird durch einen innen von Luft und außen von Abgas durch- bzw. umströmtes Rohr gebildet, das aus Keramik oder einem hochtemperaturfesten Metall besteht. Das Rekuperatorrohr ist ein Profilrohr, das nach innen und/oder außen vorstehende Vorsprünge aufweisen kann, um die Wärmeübertragung zwischen heißen Abgasen und bereits vorgewärmter Luft zu verbessern.

Der sich durch den Zusatzwärmetauscher erstreckende Rekuperator ist gegen einen an dem Zusatzwärmetauscher vorgesehenen Sitz federnd gespannt und abgedichtet. Für die Wartung kann der Rekuperator in einfacher Weise ausgebaut werden. Außerdem kann er auf diese Weise spannungsarm gehalten werden.

Das erfindungsgemäße Konzept ermöglicht außerdem die Anordnung der Wärmetauscheranordnung in einem frischluftdurchströmten Gehäuse, das auf diese Weise auf niedrigen Temperaturen gehalten wird. Die durch das Gehäuse geführte Frischluft kann der Wärmetauscheranordnung zugeführt werden.

Weitere Einzelheiten vorteilhafter Ausführungsformen der Erfindung ergeben sich aus der Zeichnung, der Beschreibung oder Ansprüchen. Es zeigen:
Figur 1 einen erfindungsgemäßen Rekuperatorbrenner, in vereinfachter Längsschnittdarstellung an einer Ofenwand.

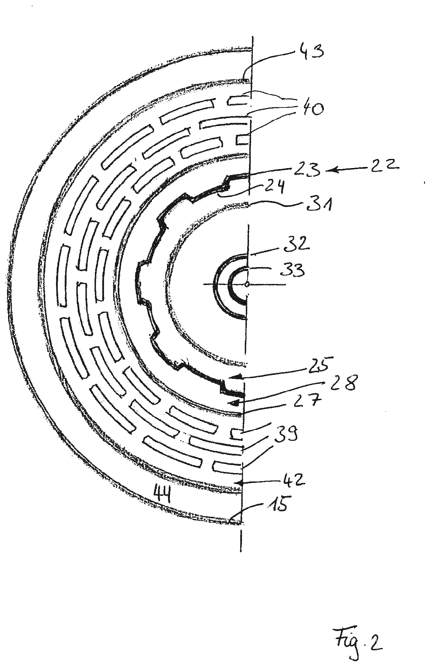

Figur 2 den Rekuperatorbrenner nach Figur 1 im Querschnitt, geschnitten entlang der Linie II-II und
Figur 3 ein Diagramm zur Veranschaulichung von Wärmeleistung und Temperaturverlauf bei der Wärmetauscheranordnung des erfindungsgemäßen Rekuperatorbrenners.

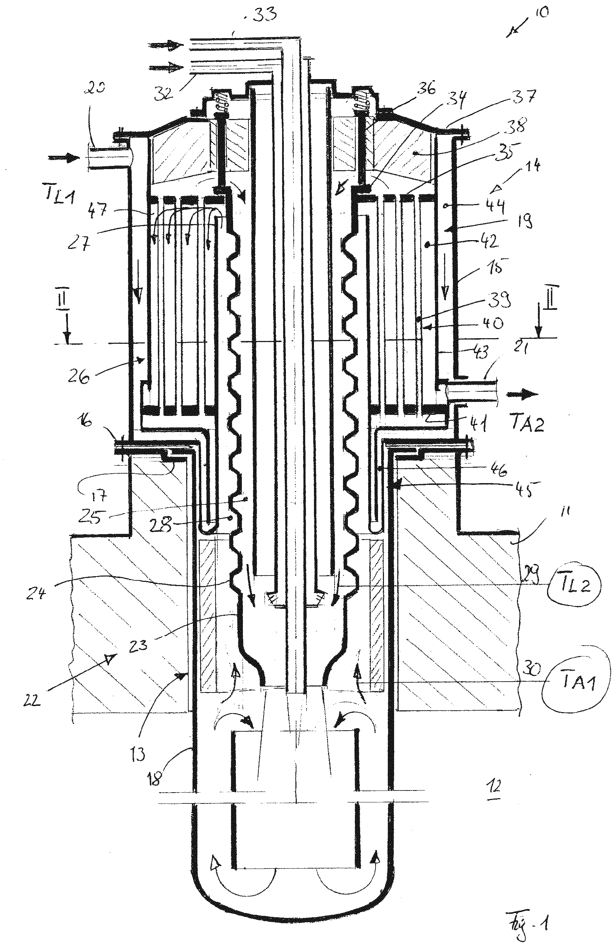

In Figur 1 ist ein Rekuperatorbrenner 10 veranschaulicht, der zur Beheizung eines von einer Ofenwand 11 umschlossenen Ofenraums 12 vorgesehen ist. Der Brenner 10 erstreckt sich durch eine in der Ofenwand 11 vorgesehene Öffnung 13, an der der Rekuperatorbrenner 10 befestigt ist. Der Rekuperatorbrenner 10 weist einen Brennerkopf 14 auf, dessen Gehäuse 15 mit einem Flansch 16 an der Ofenwand 11 gehalten ist. An dem von dem Ofenraum 12 abgewandten Ende der Öffnung 13 ist ein Sitz 17 zur Aufnahme eines Flansches eines Strahlrohrs 18 vorgesehen, das sich durch die Öffnung 13 erstreckt und dazu dient, Strahlungswärme in den Ofenraum 12 hinein abzugeben. Das Strahlrohr 18 ist von innen her vorzugsweise mittels flammenloser Oxidation, und gegebenenfalls jedoch auch anderweitig beheizt.

Das Gehäuse 15 umschließt einen Raum, in dem eine Wärmetauscheranordnung 19 angeordnet ist. Diese dient dazu Frischluft, die dem Gehäuse 15 über einen Luftanschluss 20 zugeführt ist, mittels Abgaswärme zu erhitzen. Das Abgas verliert dadurch Wärme und verlässt die Wärmetauscheranordnung 19 sowie das Gehäuse 15 an einem Abgasanschluss 21.

Zu der Wärmetauscheranordnung 19 gehört ein Rekuperator 22, mit einem Rekuperatorrohr 23, das sich vorzugsweise koaxial zu dem Strahlrohr 18 wenigstens teilweise in dieses hinein erstreckt. Das Rekuperatorrohr 23 kann ein Metallrohr oder für hohe Abgastemperaturen auch ein Keramikrohr sein. Es kann als glattwandiges Zylinderrohr oder wie dargestellt als profiliertes Rohr mit radial nach innen und/oder außen vorstehenden Vorsprüngen 24, zum Beispiel in Gestalt von hohlen Zacken oder dergleichen, ausgebildet sein. Das Rekuperatorrohr 23 umschließt mit seiner Innenseite einen Luftkanal 25.

Außen wird der Rekuperator 22 von einem Zusatzwärmetauscher 26 umschlossen, dessen rohrartige innere Wand 27 zusammen mit dem Rekuperatorrohr 23 einen Abgaskanal 28 begrenzt. Der Abgaskanal 28 und der Luftkanal 25 sind in Gegenrichtung durchströmt. Die Strömungsrichtung im Luftkanal 25 ist vom Brennerkopf 14 zu dem Strahlrohr 18 hin festgelegt (Pfeil 29), während die Strömungsrichtung des Abgases aus dem Strahlrohr 18 heraus zu dem Brennerkopf 14 hin festgelegt ist (Pfeil 30).

Radial nach innen ist der Luftkanal 25 des Rekuperators 22 durch ein Rohr 31 von einer oder mehreren Gasleitungen 32, 33 oder sonstigen Brennstoffleitungen getrennt, die verschiedenen Betriebsarten ermögliche, wie Aufheizbetrieb oder flammenloser Betrieb.

Das Rekuperatorrohr 23 weist an seinem von dem Strahlrohr 18 entfernt liegenden Ende einen Flansch 34 oder sonstigen Anschluss auf, mit dem es an einen Sitz des Zusatzwärmetauschers 26 gehalten ist. Der Sitz kann durch eine ebene, konische oder anderweitig ausgebildete Ringfläche an einer oberen Gehäusefläche 35 des Zusatzwärmetauschers 26 Ausgebildet sein. Vorzugsweise wird der Flansch 34 durch federnd gespannte Bolzen 36 oder ähnliche Mittel gegen den Sitz gedrückt. Die Bolzen 36 können sich durch einen an einem Gehäusedeckel 37 gehaltenen Isolatorkörper 38 erstrecken. Durch Abnehmen des Gehäusedeckels 37 liegt der Flansch 34 des Rekuperatorrohrs 23 frei, so dass dieses zu Wartungs- und Inspektionszwecken zugänglich ist.

Der Zusatzwärmetauscher 26 weist mindestens einen, vorzugsweise mehrere Luftkanäle 39 auf, die vorzugsweise von abgeflachten Rohren 40 umschlossen sind. Diese erstrecken sich zwischen der Gehäusefläche 35 und einem Gehäuseboden 41. Die Rohre 40 können runde Enden aufweisen, um in der Platte bzw. Fläche 35 und dem Boden 41 in runden Öffnungen dicht gefasst zu werden. In einem Abschnitt dazwischen sind die Rohre 40 jedoch vorzugsweise abgeflacht, so dass die Luftkanäle 39 spaltartig ausgebildet sind. Vorzugsweise ist die Spaltweite auf einen Wert kleiner als 3 mm begrenzt, um einen intensiven thermischen Kontakt zwischen Luft und Rohrwand zu erreichen.

Die Rohre 39 sind in einem Abgaskanal 42 des Zusatzwärmetauschers 26 angeordnet, der in einer Richtung von dem Isolatorkörper 38 weg zu dem Gehäuseboden 41 hin von Abgas durchströmt ist. Die Rohre 40 sind in Gegenrichtung von Frischluft durchströmt. Der Abgaskanal 42 ist außen von einer Umfangswand 43 umschlossen, die mit dem Gehäuse 15 einen Frischluftkanal 44 begrenzt. Dieser führt zu einem Flanschkühler 45. Der Flanschkühler 45 weist einen Luftkanal 46 auf, der sich an dem Flansch des Stahlrohrs 18 vorbei in dieses hinein und von dort zu dem Zusatzwärmetauscher 26 erstreckt.

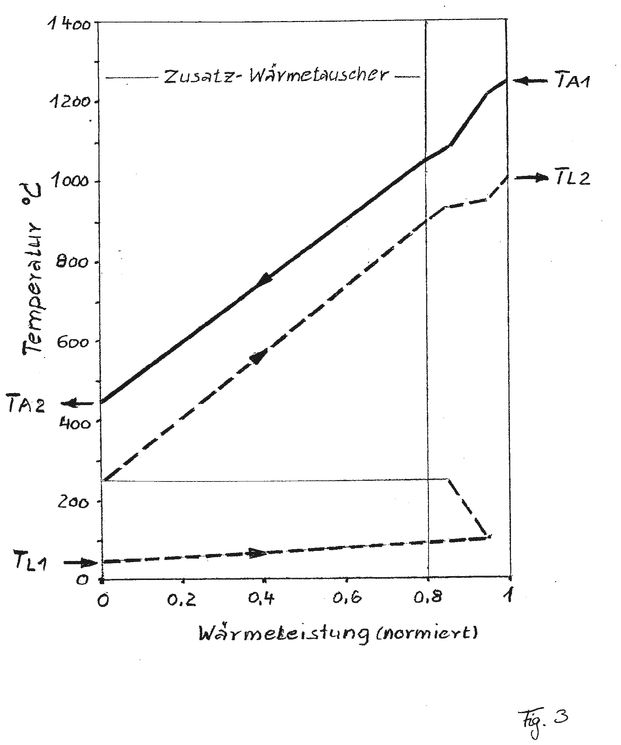

Der insoweit beschriebene Rekuperatorbrenner arbeitet wie folgt:
Zur Inbetriebnahme wird dem Luftanschluss 20 Luft und zunächst der Brennstoffleitung 32 Brennstoff zum Beispiel Gas zugeführt. Es zündet in dem strahlrohrseitigen Ende des Rekuperatorrohrs 23 durch eine entsprechende Zündeinrichtung eine Flamme, die der Aufheizung des Strahlrohrinnenraums dient. Ist dies erfolgt, wird Gas in die Brennstoffleitung 33 gegeben und die Gaszufuhr zu der Brennstoffleitung 32 allmählich reduziert und abgeschaltet. Es bildet sich in dem Strahlrohr ein großräumiger, in Figur 1 durch Pfeile angedeuteter Heißgaswirbel aus, dem Brennstoff und Luft zugeführt werden, um flammenlos zu oxidieren. In dem Strahlrohr 18 herrschen Temperaturen von vorzugsweise über 1000°C. Abgas mit einer Abgastemperatur TA1 von beispielsweise 1250°C strömt außen an dem Rekuperatorrohr 23 entlang durch den Abgaskanal 28. Figur 3 veranschaulicht den Temperaturabfall des Abgases an dem Rekuperatorrohr 18. An dem offenen Ende der inneren Wand 27 tritt das etwas abgekühlte Abgas aus dem Abgaskanal 28 mit Richtungsumkehr in den Abgaskanal 42 des Zusatzwärmetauschers 26 über (Figur 1 Pfeil Bündel 47). Es strömt dann durch den Abgaskanal 42 an den Rohren 40 entlang zu dem Anschluss 21 und verlässt dort deutliche abgekühlt mit einer Temperatur beispielsweise von 450°C den Anschluss 21.

Die dem Anschluss 20 zum Beispiel mit Umgebungstemperatur TL1 (20°C) zugeführte Frischluft erwärmt sich in dem Frischluftkanal 44 zunächst nur leicht. Sie erreicht mit leicht erhöhter Temperatur von beispielsweise 50°C den Flanschkühler 45 und tritt dann auf zum Beispiel 250°C erwärmt in die Luftkanäle 39 des Zusatzwärmetauschers 26 ein. Hier erwärmt sie sich auf ihrem Weg von Flansch des Strahlrohrs 18 weg auf zum Beispiel 900°, wonach sie unter Richtungsumkehr in den Luftkanal 25 des Rekuperators 22 einströmt. Durch ihre hier bereits vorhandene hohe Temperatur werden die an dem Rekuperatorrohr 22 auftretenden thermischen Spannungen gering gehalten.

Auf ihrem Weg durch den Luftkanal 25 erwärmt sich die Luft weiter auf beispielsweise 1000°C. Die nachstehende Tabelle vergleicht den erfindungsgemäßen insoweit beschriebenen beispielhaft für eine Nettoleistung von 60 kW ausgebildeten erfindungsgemäßen Rekuperatorbrenner 10 mit einem herkömmlichen Rekuperatorbrenner ohne Zusatzwärmetauscher.

| | Rekuperatorbrenner | | |
|---|---|---|---|
| | 1. ohne | | mit Zusatz-WT |
| Wärmeübertragungsfläche | m² | 1 | 1+3,5 |
| Abgaseintrittstemperatur TA1 | °C | 1250 | 1250 |
| Lufteintrittstemperatur TL1 | °C | 50 | 50 |
| Abgasaustrittstemperatur TA2 | °C | 750 | 450 |
| Luftvorwärmung TL2 | °C | 640 | 1000 |
| Feuerungswirkungsgrad | % | 65 | 81 |
| Brennstoffbedarf | kW | 92 | 74 |
| Ersparnis | % | - | 19,5 |
| Erdgaseinsparung bei 10kWh/m³ | m³/h | - | 1,8 |

Die Erhöhung des Feuerungswirkungsgrads von 65% auf 81% hat eine deutliche Minderung des Brennstoffbedarfs zur Folge. Bei 5000 Betriebsstunden im Jahr ergibt sich eine Ersparnis von 9000 m³ Erdgas.

Zur Verbesserung des Wirkungsgrads von Rekuperatorbrennern, vorzugsweise über 80%, wird ein Rekuperatorbrenner 10 mit einem Zusatzwärmetauscher 26 ausgestattet, der den Rekuperator 22 umschließt, wobei sowohl der Rekuperator als auch der Zusatzwärmetauscher vorzugsweise als reine Gegenstromwärmetauscher ausgebildet sind, wobei dem Zusatzwärmetauscher 26 die Luft auf der der Ofenwand 11 zugewandten Seite zugeführt wird. Die spezifische Wärmeübertragungsfläche des Zusatzwärmetauschers beträgt vorzugsweise mehr als 0,04 m²/kW Brennstoffleistung.

Zusätzlich kann das Gehäuse 15 um den Zusatzwärmetauscher 26 mit kalter Luft von innen gekühlt werden. Außerdem kann zumindest optional die Luft zunächst einem Flanschkühler 45 zugeleitet sein, um den Bereich des Flansches 16 vor der hier noch hohen Abgastemperatur zu schützen. Dies ist insbesondere bei der Anwendung des Strahlrohrs 18 vorteilhaft.

Vorzugsweise wird das keramische Rekuperatorrohr 26 gegen eine austrittsseitige Fläche 35 des Zusatzwärmetauschers 26 federnd gedrückt und abgedichtet. Dies kommt der Wartung zugute. Der Zusatzwärmetauscher 26 weist vorzugsweise spaltförmige Luftkanäle 39 auf. Vorzugsweise sind diese in abgeflachten Rohren 40 ausgebildet.

### Bezugszeichenliste:

- 10: Rekuperatorbrenner
- 11: Ofenwand
- 12: Ofenraum
- 13: Öffnung
- 14: Brennerkopf
- 15: Gehäuse
- 16: Flansch
- 17: Sitz
- 18: Strahlrohr
- 19: Wärmetauscheranordnung
- 20: Luftanschluss
- 21: Abgasanschluss
- 22: Rekuperator
- 23: Rekuperatorrohr, Profilrohr
- 24: Vorsprünge
- 25: Luftkanal des Rekuperators 22
- 26: Zusatzwärmetauscher
- 27: innere Wand des Zusatzwärmetauschers 26
- 28: Abgaskanal des Rekuperators 22
- 29: Strömungsrichtung der Luft in dem Rekuperator
- 30: Strömungsrichtung des Abgases in dem Rekuperator
- 31: Rohr
- 32: Brennstoffleitung für Anheizbetrieb
- 33: Brennstoffleitung für flammenlosen Betrieb
- 34: Flansch
- 35: Gehäusefläche
- 36: Bolzen
- 37: Gehäusedeckel
- 38: Isolatorkörper
- 39: Luftkanäle des Zusatzwärmetauschers 26
- 40: Rohre
- 41: Gehäuseboden
- 42: Abgaskanal des Zusatzwärmetauschers
- 43: Umfangswand
- 44: Frischluftkanal
- 45: Flanschkühler
- 46: Luftkanal

## Patentansprüche

1. Rekuperatorbrenner (10), insbesondere für Industrieöfen,
mit einem Brennerkopf (14), der mittels eines Brennerflansches (16) an einer Ofenwand (11) so befestigbar ist, dass sich der Brenner (10) durch eine Öffnung (13) der Ofenwand (11) erstreckt, die einen Ofenraum (12) begrenzt,
mit einer Wärmerückgewinnungsanordnung (19) zur Brenner-Luftvorwärmung mittels Abgaswärme, wobei die Wärmerückgewinnungsanordnung (19) einen Rekuperator (22) und einen diesen ringförmig umschließenden Zusatzwärmetauscher (26) aufweist, die seriell durchströmt sind,
wobei der Rekuperator (22) ein Gegenstromwärmetauscher ist, der mindestens einen Luftkanal (25) und mindestens einen Abgaskanal (28) aufweist, und wobei der Rekuperator (22) durch ein Rohr aus Keramik oder hochtemperaturfestem Metall gebildet ist,
wobei der Zusatzwärmetauscher (26) ein Gegenstromwärmetauscher ist, der mindestens einen Luftkanal (39) und mindestens einen Abgaskanal (42) aufweist,
wobei der Abgaskanal (28) des Rekuperators (22) und der Abgaskanal (42) des Zusatzwärmetauschers (26) unterschiedliche Durchströmungsrichtungen aufweisen, und wobei der Luftkanal (25) des Rekuperators (22) und der Luftkanal (39) des Zusatzwärmetauschers (26) unterschiedliche Durchströmungsrichtungen aufweisen, **dadurch gekennzeichnet, dass**
der Zusatzwärmetauscher (26) mehrere Flachrohre (40) mit unrunden Luftkanälen (39) aufweist, die in dem mindestens einen Abgaskanal (42) angeordnet sind, dass
der Zusatzwärmetauscher (26) einen Sitz für einen Flansch (34) des Rekuperators (22) aufweist, der federnd gegen den Sitz gespannt ist, und dass
der Rekuperator (22) und der Zusatzwärmetauscher (26) aus unterschiedlichen Materialien bestehen.

2. Rekuperatorbrenner nach Anspruch 1, **dadurch gekennzeichnet, dass** der Luftkanal (25) des Rekuperators (22) von aufzuwärmender Luft in einer Richtung in den Ofenraum (12) hinein durchströmbar ist und dass der Abgaskanal (28) des Rekuperators (22) in einer Richtung aus dem Ofenraum (12) hinaus von Abgas durchströmbar ist.

3. Rekuperatorbrenner nach einem der vorstehenden Ansprüche, **dadurch gekennzeichnet, dass** der Luftkanal (39) des Zusatzwärmetauschers (26) von aufzuwärmender Luft in einer Richtung von der Ofenwand (11) weg durchströmbar ist und dass der Abgaskanal (42) des Zusatzwärmetauschers (26) in einer Richtung zu der Ofenwand (11) hin von Abgas durchströmbar ist.

4. Rekuperatorbrenner nach einem der vorstehenden Ansprüche, **dadurch gekennzeichnet, dass** der Zusatzwärmetauscher (26) eine spezifische Wärmeübertragungsfläche von wenigstes 0,04 m²/kW Brennstoffleistung aufweist.

5. Rekuperatorbrenner nach einem der vorstehenden Ansprüche, **dadurch gekennzeichnet, dass** der Zusatzwärmetauscher (26) mehrere parallele Luftkanäle (39) aufweist.

6. Rekuperatorbrenner nach einem der vorstehenden Ansprüche, **dadurch gekennzeichnet, dass** der Rekuperator (22) ein Profilrohr (23) aufweist, das den Luftkanal (25) des Rekuperators (22) umschließt und dessen Außenseite den Abgasstrom berührt.

7. Rekuperatorbrenner nach Anspruch 1, **dadurch gekennzeichnet, dass** das Profilrohr (23) radial nach innen und/oder außen vorstehende Vorsprünge (24) aufweist.

8. Rekuperatorbrenner nach einem der vorstehenden Ansprüche, **dadurch gekennzeichnet, dass** an dem Brennerflansch (16) ein Flanschkühler (45) angeordnet ist, der einen Kühlluftkanal (46) aufweist.

9. Rekuperatorbrenner nach Anspruch 8, **dadurch gekennzeichnet, dass** der Kühlluftkanal (46) mit dem Luftkanal (39) des Zusatzwärmetauschers (26) verbunden ist.

10. Rekuperatorbrenner nach einem der vorstehenden Ansprüche, **dadurch gekennzeichnet, dass** der Brennerkopf (14) ein Gehäuse (15) aufweist, das einen Frischluftkanal (44) umschließt.

## Claims

1. Recuperative burner (10), in particular for industrial ovens,
with a burner head (14) which can be fixed by means of a burner flange (16) to an oven wall (11) such that the burner (10) extends through an opening (13) in the oven wall (11) which delimits an oven chamber (12),
with a heat recovery assembly (19) for preheating the burner air by means of exhaust gas heat, wherein the heat recovery assembly (19) has a recuperator (22) and a supplementary heat exchanger (26) surrounding the latter in annular fashion, both with serial through-flow,
wherein the recuperator (22) is a contraflow heat exchanger which has at least one air channel (25) and at least one exhaust gas channel (28), and wherein the recuperator (22) is formed by a pipe made of ceramic or high-temperature-resistant metal, wherein the supplementary heat exchanger (26) is a contraflow heat exchanger which has at least one air channel (39) and at least one exhaust gas channel (42),
wherein the exhaust gas channel (28) of the recuperator (22) and the exhaust gas channel (42) of the supplementary heat exchanger (26) have different through-flow directions, and
wherein the air channel (25) of the recuperator (22) and the air channel (39) of the supplementary heat exchanger (26) have different through-flow directions, **characterised in that**
the supplementary heat exchanger (26) has several flat tubes (40) with non-round air channels (39) which are arranged in the at least one exhaust gas channel (42),
that the supplementary heat exchanger (26) has a seat for a flange (34) of the recuperator (22) which is spring-loaded against the seat, and
that the recuperator (22) and the supplementary heat exchanger (26) consist of different materials.

2. Recuperative burner according to claim 1, **characterised in that** air to be heated flows through the air channel (25) of the recuperator (22) in a direction into the oven chamber (12), and that exhaust gas flows through the exhaust gas channel (28) of the recuperator (22) in a direction out of the oven chamber (12).

3. Recuperative burner according to one of the preceding claims, **characterised in that** air to be heated can flow through the air channel (39) of the supplementary heat exchanger (26) in a direction away from the oven wall (11), and exhaust gas can flow through the exhaust gas channel (42) of the supplementary heat exchanger (26) in a direction towards the oven wall (11).

4. Recuperative burner according to any of the preceding claims, **characterised in that** the supplementary heat exchanger (26) has a specific heat transfer area of at least 0.04 m²/kW fuel power.

5. Recuperative burner according to any of the preceding claims, **characterised in that** the supplementary heat exchanger (26) has several parallel air channels (39).

6. Recuperative burner according to any of the preceding claims, **characterised in that** the recuperator (22) has a profiled tube (23) which surrounds the air channel (25) of the recuperator (22), and the outside of which touches the exhaust gas stream.

7. Recuperative burner according to claim 1, **characterised in that** the profiled tube (23) has radially inwardly and/or outwardly extending protrusions (24).

8. Recuperative burner according to any of the preceding claims, **characterised in that** a flange cooler (45) is arranged on the burner flange (16).

9. Recuperative burner according to claim 8, **characterised in that** the cooling air channel (46) is connected to the air channel (39) of the supplementary heat exchanger (26).

10. Recuperative burner according to any of the preceding claims, **characterised in that** the burner head (14) has a housing (15) which surrounds a fresh air channel (44).

## Revendications

1. Brûleur à récupération (10), destiné en particulier à des fours industriels,
comprenant une tête de brûleur (14) qui peut être fixée à l'aide d'un collet de brûleur (16) à une paroi de four (11), de telle manière que le brûleur (10) s'étende à travers une ouverture (13) de la paroi de four (11) qui délimite une enceinte de four (12),
comprenant un dispositif de récupération de chaleur (19) destiné au préchauffage de l'air de brûleur à l'aide de la chaleur des fumées, le dispositif de récupération de chaleur (19) présentant un récupérateur (22) et un échangeur de chaleur supplémentaire (26) entourant ce dernier de façon annulaire, qui sont traversés de manière sérielle par un flux,
le récupérateur (22) étant un échangeur de chaleur à contre-courant qui présente au moins un conduit d'air (25) et au moins un conduit de fumées (28), et le récupérateur (22) étant constitué d'un tube en céramique ou en métal résistant aux températures élevées,
l'échangeur de chaleur supplémentaire (26) étant un échangeur de chaleur à contre-courant qui présente au moins un conduit d'air (39) et au moins un conduit de fumées (42),
le conduit de fumées (28) du récupérateur (22) et le conduit de fumées (42) de l'échangeur de chaleur supplémentaire (26) présentant des sens d'écoulement différents, et
le conduit d'air (25) du récupérateur (22) et le conduit d'air (39) de l'échangeur de chaleur supplémentaire (26) présentant des sens d'écoulement différents,
**caractérisé en ce que**
l'échangeur de chaleur supplémentaire (26) présente plusieurs tubes plats (40), avec des conduits d'air (39) non ronds, qui sont disposés dans le conduit de fumées (42), au nombre d'au moins un, **en ce que**
l'échangeur de chaleur supplémentaire (26) présente un siège pour un collet (34) du récupérateur (22) qui est mis sous précontrainte élastique contre le siège, et **en ce que**
le récupérateur (22) et l'échangeur de chaleur supplémentaire (26) sont constitués de matériaux différents.

2. Brûleur à récupérateur selon la revendication 1, **caractérisé en ce que** le conduit d'air (25) du récupérateur (22) peut être traversé dans un sens par de l'air à réchauffer, pour le faire entrer dans l'enceinte de four (12), et **en ce que** le conduit de fumées (28) du récupérateur (22) peut être traversé dans un sens par des fumées, pour les évacuer de l'enceinte de four (12).

3. Brûleur à récupérateur selon l'une des revendications précédentes, **caractérisé en ce que** le conduit d'air (39) de l'échangeur de chaleur supplémentaire (26) peut être traversé par de l'air à réchauffer, dans un sens qui est opposé à la paroi de four (11), et **en ce que** le conduit de fumées (42) de l'échangeur de chaleur supplémentaire (26) peut être traversé par les fumées dans un sens qui est dirigé vers la paroi de four (11).

4. Brûleur à récupérateur selon l'une des revendications précédentes, **caractérisé en ce que** l'échangeur de chaleur supplémentaire (26) présente une surface de transfert de chaleur spécifique d'une puissance de combustible d'au moins 0,04 m²/kW.

5. Brûleur à récupérateur selon l'une des revendications précédentes, **caractérisé en ce que** l'échangeur de chaleur supplémentaire (26) présente plusieurs conduits d'air (39) parallèles.

6. Brûleur à récupérateur selon l'une des revendications précédentes, **caractérisé en ce que** le récupérateur (22) présente un tube profilé (23) qui entoure le conduit d'air (25) du récupérateur (22) et dont la face externe est en contact avec le flux de fumées.

7. Brûleur à récupérateur selon la revendication 1, **caractérisé en ce que** le tube profilé (23) présente des saillies (24) qui avancent radialement vers l'intérieur et/ou vers l'extérieur.

8. Brûleur à récupérateur selon l'une des revendications précédentes, **caractérisé en ce qu'**il est prévu sur le collet de brûleur (16), un refroidisseur de collet (45) qui présente un conduit d'air de refroidissement (46).

9. Brûleur à récupérateur selon la revendication 8, **caractérisé en ce que** le conduit d'air de refroidissement (46) est relié au conduit d'air (39) de l'échangeur de chaleur supplémentaire (26).

10. Brûleur à récupérateur selon l'une des revendications précédentes, **caractérisé en ce que** la tête de brûleur (14) présente un carter (15) qui entoure un conduit d'air frais (44).
